# EUROPÄISCHE PATENTANMELDUNG

(11) **EP 4 462 619 A2**
(43) Veröffentlichungstag der Anmeldung: **13.11.2024**
(21) Anmeldenummer: 24174012.5
(22) Anmeldetag: 03.05.2024
(51) Int. Cl.: H02G 3/16, H02G 3/06, H02G 3/08, H01R 4/48, H01R 9/24

(54) **KLEMMENEINHEIT ZUM ELEKTRISCHEN ANSCHLUSS EINES ANSCHLUSSKABELS**

(30) Priorität: 12.05.2023 DE 202023102573 U
(71) Anmelder: Electro Terminal GmbH & Co KG, 6020 Innsbruck (AT)
(72) Erfinder: KREUZBICHLER, Jürgen, 6067 Absam (AT)
(74) Vertreter: Kiwit, Benedikt

(57) **Zusammenfassung**

Die vorliegende Erfindung betrifft eine Klemmeneinheit (1) zum elektrischen Anschluss eines Anschlusskabels, aufweisend ein sich entlang einer Längsachse (X) längs erstreckendes Außengehäuse (2) mit einem Gehäuse-Unterteil (3) und einen Gehäuse-Deckel (4), welche wahlweise verschließbar sind, um einen Anschlussraum (A) zu umschließen, und wahlweise öffenbar sind, um den Anschlussraum (A) freizulegen, einer Kabeldurchführung (5) zur Durchführung des Anschlusskabels parallel zur Längsachse (X) in den Anschlussraum (A), und einer Zugentlastung (6) mit einem Arretierabschnitt (61) zum Arretieren des durch die Kabeldurchführung (5) geführten Anschlusskabels in der Klemmeneinheit (1), eine Klemme (7), insbesondere eine Anschluss- oder Verbindungsklemme, welche lösbar in dem Anschlussraum (A) angeordnet ist, wobei die Klemme (7) ein Isolierstoffgehäuse (70) und ein in dem Isolierstoffgehäuse (70) aufgenommenes elektrisches Kontaktelement (71) aufweist, wobei das Kontaktelement (71) mehreren Klemmkontaktstellen (72) zum Einführen und elektrischen Anschließen jeweils einer Ader des Anschlusskabels in einer Leitereinführrichtung (L1) aufweist, wobei die Leitereinführrichtungen (L1) alle parallel zueinander ausgerichtet sind, wobei die Klemme (7) einen sich parallel zu den Leitereinführrichtungen (L1) erstreckend vorstehenden ersten Rastabschnitt (8) aufweist, wobei das Außengehäuse (2) im Anschlussraum (A) einen mit dem ersten Rastabschnitt (8) zur Bildung einer Rastverbindung korrespondierenden zweiten Rastabschnitt (9) aufweist, und wobei die Rastabschnitte (8, 9) derart ausgebildet sind, so dass diese bei Einsetzen der Klemme (7) in den Anschlussraum (A) in einer Einsetzrichtung (E) senkrecht zur Längsachse (X) die Rastverbindung eingehen, um die Klemme (7) derart in dem Anschlussraum (A) festzulegen, so dass die Leitereinführrichtungen (L1) von der Kabeldurchführung (5) kommend parallel zur Längsachse (X) ausgerichtet sind.

## Beschreibung

Die vorliegende Erfindung betrifft eine Klemmeneinheit zum elektrischen Anschluss eines Anschlusskabels sowie ein Kit zur Montage einer Klemmeneinheit.

Klemmen, wie insbesondere Anschluss- oder Verbindungsklemmen, sind aus dem Stand der Technik grundsätzlich bekannt. Diese werden in der Regel eingesetzt, um elektrische Leiter daran anzuschließen. Je nach Art der Klemme kann so beispielsweise ein Durchschleifen erzielt werden, wenn zwei Anschlusskabel über die Klemme miteinander verbunden sind. Alternativ oder ergänzend ist es mit entsprechenden Klemmen auch möglich, die von einem Anschlusskabel zugeführten Leiter über die Klemme mit einer Verdrahtung an einem elektrisch betriebenen Gerät zu verbinden. Beispielsweise werden derartige Klemmen in Leuchten eingesetzt. Diese Klemmen werden dann meist in dem elektrisch betriebenen Gerät befestigt. Grundsätzlich ist es auch denkbar, eine sogenannte fliegende Klemme bereitzustellen, welche beispielsweise in einem Raum hinter einer abgehängten Decke platziert werden kann, um beispielsweise an der abgehängten Decke vorgesehene Leuchten an ein entsprechend zugeführtes Anschlusskabel anzuschließen. Dabei kann es sich beispielsweise um Einbauleuchten aber auch um Anbau- oder Pendelleuchten handeln. Auch andere elektrisch betriebene Geräte können eine entsprechende fliegende Klemme aufweisen. Da in diesem Fall die Klemme und insbesondere die entsprechenden Anschlussstellen nicht durch ein Gehäuse des elektrisch zu betreibenden Geräts, wie beispielsweise ein Leuchtengehäuse, geschützt ist/sind, werden derartige Klemmen oft in eigenen Gehäusen oder Installationsdosen aufgenommen.

Es ist nunmehr eine Aufgabe der vorliegenden Erfindung, eine Klemmeneinheit der eingangs genannten Art mit einem Außengehäuse und einer darin aufgenommenen Klemme bereitzustellen, welche eine einfache und sichere sowie flexible Montage der Klemmeneinheit sowie ein einfaches und sicheres Anschließen eines Anschlusskabels ermöglichen.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Gemäß einem ersten Aspekt betrifft die vorliegende Erfindung eine Klemmeinheit zum elektrischen Anschluss eines Anschlusskabels. Die Klemmeneinheit weist ein sich entlang einer Längsachse längs erstreckendes Außengehäuse auf. Das Außengehäuse wiederum weist ein Gehäuse-Unterteil und einen Gehäuse-Deckel auf. Das Gehäuse-Unterteil und der Gehäuse-Deckel sind wahlweise verschließbar, um einen Anschlussraum zu umschließen, und wahlweise öffenbar, um den Anschlussraum freizulegen. Das Außengehäuse weist des Weiteren eine Kabeldurchführung zur Durchführung des Anschlusskabels parallel zu Längsachse in den Anschlussraum auf. Ebenso weist das Außengehäuse eine Zugentlastung mit einem Arretierabschnitt zum Arretieren des durch die Kabeldurchführung geführten Anschlusskabels in der Klemmeneinheit auf. Die Klemmeneinheit weist des Weiteren eine Klemme auf, insbesondere eine Anschluss- oder Verbindungsklemme. Die Klemme ist lösbar in dem Anschlussraum angeordnet. Die Klemme weist ein Isolierstoffgehäuse sowie ein in dem Isolierstoffgehäuse aufgenommenes elektrisches Kontaktelement auf. Das Kontaktelement wiederum weist mehrere Klemmkontaktstellen zum Einführen und elektrischen Anschließen jeweils einer Ader des Anschlusskabels in einer Leitereinführrichtung auf. Die Leitereinführrichtungen sind alle parallel zueinander ausgerichtet. Die Klemme weist einen sich parallel zu den Leitereinführrichtungen erstreckend vorstehenden ersten Rastabschnitt auf. Das Außengehäuse weist im Anschlussraum einen mit dem ersten Rastabschnitt zur Bildung einer Rastverbindung korrespondierenden zweiten Rastabschnitt auf. Die Rastabschnitte sind derart ausgebildet, so dass diese bei Einsetzen der Klemme in den Anschlussraum in einer Einsetzrichtung senkrecht zur Längsachse die Rastverbindung eingehen, um die Klemme derart in dem Anschlussraum festzulegen, so dass die Leitereinführrichtungen von der Kabeldurchführung kommend parallel zur Längsachse ausgerichtet sind.

Die Rastabschnitte bieten zum einen eine einfache Möglichkeit, eine Klemme schnell und sicher in dem Gehäuse festzulegen. Somit kann auch ein Anschließen von Adern eines Anschlusskabels in einfacher und sicherer Weise vorgenommen werden. Da die Kabeldurchführung in Leitereinführrichtung auf die Klemmkontaktstellen zu ausgerichtet ist, kann so das entsprechende Anschließen weiter vereinfacht werden. Zudem ergibt sich so aufgrund der Längsausrichtung aller Komponenten einschließlich des anzuschließenden Anschlusskabels eine entlang der Längsachse langgestreckte Form, so dass beispielsweise ein Durchführen der Klemmeneinheit entlang ihrer Längsachse auch durch kleinere Öffnungen in einfacher Weise ermöglicht ist. Die Zugentlastung wiederum sorgt für einen dauerhaft sicheren Betrieb bzw. elektrischen Anschluss des Anschlusskabels an der Klemme. Die Zugentlastung kann ggf. auch bereits zum einfachen Anschluss der Adern an die Klemmkontaktstellen eingesetzt werden. Die Bereitstellung des Außengehäuses durch ein Gehäuse-Unterteil und einen Gehäuse-Deckel ermöglicht ferner eine einfache Zugänglichkeit des Anschlussraums zur Montage der Klemme einerseits sowie zum Anschluss des Anschlusskabels andererseits, und lässt sich zudem in einfacher Weise verschließen und somit den Anschlussraum umschließen, um so die durch die Klemme bereitgestellten Anschlussstellen über die Klemmkontaktstellen sicher geschützt aufzunehmen.

Der erste Rastabschnitt kann eine Rastausnehmung aufweisen. Der zweite Rastabschnitt kann einen entgegen der Einsetzrichtung vorstehenden Rastvorsprung aufweisen, welcher zur Bildung der Rastverbindung in die Rastausnehmung rastend eingreift. Somit können einfache aber wirkungsvolle strukturelle Elemente zum Bilden der Rastverbindung bereitgestellt werden.

Der Rastvorsprung kann als Rastpin ausgebildet sein. Ein solcher lässt sich einerseits einfach herstellen, während er andererseits eine besonders wirkungsvolle Rastverbindung erzeugen kann. Je nach Größe und Durchmesser des Rastpins lassen sich so beliebige Haltekräfte umsetzen, um die Klemme auch während des Vorgangs des Anschließens eines Anschlusskabels und die dabei auf die Klemme wirkenden mechanischen Kräfte sicher aufzunehmen.

Der Rastvorsprung kann vorzugsweise in Einsetzrichtung geschlitzt sein. Durch eine solche Ausgestaltung kann der Rastvorsprung als (ggf. mehrteilige) Raste mit definierter Schwenkbewegung ausgebildet werden, und somit eine besonders einfache Montage bei hoher Stabilität ermöglichen.

Das Außengehäuse kann den Anschlussraum seitlich und/oder axial bezüglich der Längsachse begrenzende Stützabschnitte aufweisen. Diese Stützabschnitte können bei in den Anschlussraum aufgenommener Klemme die Klemme seitlich ausrichten und abstützen. Somit kann zum einen die Klemme in einfacher Weise definiert ausgerichtet werden. Auf diese Weise kann auch ein Fehleinbau einfach vermieden werden. Zum anderen kann das Außengehäuse so in einfacher Weise als Gegenlager für auf die Klemme bei dem Anschluss des Anschlusskabels wirkende Kräfte dienen. Dies wiederum kann vorteilhaft dazu dienen, die Rastverbindung entsprechend zu entlasten, so dass die für die Rastverbindung dienenden Rastabschnitte entsprechend kleindimensionierter und ggf. kompakter ausgebildet werden können.

Der erste Rastabschnitt kann in Einsetzrichtung gesehen eine Außenkontur aufweisen. Auch der zweite Rastabschnitt kann in Einsetzrichtung gesehen eine der Außenkontur entsprechende Innenkontur aufweisen. Die Außenkontur und die Innenkontur liegen in der Rastverbindung vorzugsweise wenigstens teilweise aneinander an. Somit kann im Bereich der Rastverbindung eine Kontur bereitgestellt werden welche einen einfachen und sicheren sowie definierten Einbau der Klemme in dem Außengehäuse ermöglicht.

Die Innenkontur kann bevorzugt wenigstens einen Teil des Stützabschnitts aufweisen oder bilden. Auf diese Weise können die Vorteile der Stützabschnitte direkt in den Bereich der Rastverbindung verlagert werden, so dass entsprechende Kräfte unmittelbar aufgenommen werden können. Dies sorgt für eine besonders stabile Verbindung zwischen Klemme und Außengehäuse.

Die Innenkontur kann durch eine Ausnehmung oder Vertiefung in dem Außengehäuse gebildet sein. Somit kann die Innenkontur in besonders einfacher Weise bereitgestellt werden. Dient die Innenkontur zudem als Stützabschnitt, so kann die trägerartige Struktur des Außengehäuses im Bereich der Innenkontur als besonders stabiler Stützabschnitt bereitgestellt werden.

Der erste Rastabschnitt kann als vorstehende Lasche gebildet sein. Somit kann der erste Rastabschnitt besonders einfach und somit kostengünstig bereitgestellt werden.

Der erste Rastabschnitt kann bevorzugt integral mit dem Isolierstoffgehäuse oder integral mit dem Kontaktelement ausgebildet sein. Ist der erste Rastabschnitt integral mit dem Isolierstoffgehäuse ausgebildet, so kann dieser besonders einfach, beispielsweise in einem Kunststoffspritzgussverfahren, zusammen mit dem Isolierstoffgehäuse hergestellt werden. Somit ist auch eine Verbindung des Rastabschnitts mit der Klemme in hocheffektiver Weise bereitgestellt. Ist der erste Rastabschnitt integral mit dem Kontaktelement ausgebildet, so kann der erste Rastabschnitt beispielsweise auch weitere (elektrische) Funktionen übernehmen; beispielsweise als Erdungskontakt dienen. Der erste Rastabschnitt kann dann beispielsweise in einem Stanz-Biege-Prozess zur Herstellung des Kontaktelements hergestellt werden.

Der erste Rastabschnitt kann auf einer der Kabeldurchführung zugewandten oder auf einer der Kabeldurchführung abgewandten Seite der Klemme vorgesehen sein. Somit kann, je nach Einsatzgebiet und Dimension und Anordnung der einzelnen Elemente, eine einerseits möglichst kompakte und andererseits möglichst stabile Klemmeneinheit bereitgestellt werden.

Die Klemme kann auch zwei der ersten Rastabschnitte aufweisen, welche bezüglich der Leitereinführrichtungen oder bezügliche der Längsachse gesehen an axial gegenüberliegenden Seiten der Klemme vorgesehen sind. In diesem Fall ist es beispielsweise denkbar, die Klemme mit dem einen zweiten Rastabschnitt entweder mit dem einen der ersten Rastabschnitte in Rastverbindung zu bringen oder in einer um 180° gedrehten Orientierung mit dem anderen der ersten Rastabschnitte in Rastverbindung zu bringen. Somit kann die Klemme beispielsweise, nach Bedarf, in zwei unterschiedlichen Orientierungen in dem Außengehäuse vorgesehen werden.

Das Außengehäuse kann im Anschlussraum - entsprechend der zwei ersten Rastabschnitte - ebenso zwei der zweiten Rastabschnitte aufweisen, welche bezüglich der Längsachse axial zueinander versetzt vorgesehen sind, um jeweils mit einem der ersten Rastabschnitte die Rastverbindung einzugehen. Durch die gegenüberliegend vorgesehenen Rastverbindungen kann so eine besonders stabile Verbindung der Klemme in dem Außengehäuse bereitgestellt werden. Da diese bevorzugt durch einfaches Einsetzten der Klemme hergestellt werden, kann mit besonders einfachem Montageaufwand eine hocheffektive Verbindung zwischen Klemme und Außengehäuse hergestellt werden. Die Klemme ist so in besonders hohem Maße sicher in dem Außengehäuse angeordnet. Ist dabei dann beispielsweise der eine erste Rastabschnitt integraler Teil des Isolierstoffgehäuses und der andere der ersten Rastabschnitte integraler Teil des Kontaktelements, so können die zuvor beschriebenen Vorteile in einer Klemme vereint kombiniert bereitgestellt werden.

Das Außengehäuse kann an einer bezüglich dem zweiten Rastabschnitt gegenüberliegenden Seite des Anschlussraums einen Aufnahmeabschnitt aufweisen, um die Klemme dort in Richtung der Längsachse teilweise und so senkrecht zur Längsachse formschlüssig aufzunehmen. Bei in dem Aufnahmeabschnitt formschlüssig aufgenommener Klemme kann die Klemme dann um eine Schwenkachse herum mit dem ersten Rastabschnitt in Einsetzrichtung schwenkbar gelagert sein, um die Rastverbindung einzugehen. Mit anderen Worten kann der Aufnahmeabschnitt als Lager dienen, um den die Klemme entsprechend verschwenkt werden kann, um die Rastverbindung einzugehen. Der Aufnahmeabschnitt kann somit zum einen als weiteres Elemente zum Festlegen der Klemme dienen, während er andererseits zu einem definierten Überführen der Rastabschnitte in die Rastverbindung dienen kann. Somit kann eine einfache und sichere Befestigung der Klemme in dem Anschlussgehäuse ermöglicht werden.

Die Zugentlastung kann bevorzugt zwei der Arretierabschnitte aufweisen. Diese sind dann in einer Richtung senkrecht zur Längsachse und senkrecht zur Einsetzrichtung zueinander versetzt angeordnet. Somit können beispielsweise auch mehrere Anschlusskabel entsprechend über die Zugentlastung arretiert werden.

Die Zugentlastung kann an einem bezüglich der Längsachse axialen Ende des Außengehäuses vorgesehen sein. Somit kann ein über die Kabeldurchführung in den Anschlussraum geführtes Anschlusskabel direkt im Bereich des Eintritts in das Außengehäuse arretiert werden. Somit kann ein Bereich zum Anschließen der Adern an die Klemme trotz insgesamt kompakter Abmaße der Klemmeneinheit mit ausreichendem Montageraum bereitgestellt werden.

Das Außengehäuse kann bevorzugt ferner eine weitere Kabeldurchführung zur Durchführung eines weiteren Anschlusskabels parallel zur Längsachse in dem Anschlussraum aufweisen. Ebenso kann das Außengehäuse eine weitere Zugentlastung mit einem weiteren Arretierabschnitt zum Arretieren des durch die weitere Kabeldurchführung geführten Anschlusskabels in der Klemmeneinheit aufweisen. Die weitere Zugentlastung ist damit bevorzugt auf einer bezüglich des Anschlussraums gegenüberliegenden Seite der Zugentlastung vorgesehen. Somit kann das Zuführen eines Anschlusskabels wahlweise über eine der beiden Stirnseiten des Außengehäuses oder gleichzeitig über beide Stirnseiten des Außengehäuses erfolgen. So kann beispielsweise, je nach Orientierung der Klemme, die Zuführung entweder von der einen Seite oder der anderen Seite erfolgen. Bei entsprechend ausgebildeter Klemme ist grundsätzlich auch der Anschluss zweier Anschlusskabel über die gegenüberliegenden Kabeldurchführungen denkbar.

Die weitere Zugentlastung kann an einem dem axialen Ende bezüglich der Längsachse gegenüberliegenden axialen Ende des Außengehäuses vorgesehen sein. Somit lassen sich die bereits zuvor beschriebenen Vorteile der am axialen Ende des Außengehäuses vorgesehenen Zugentlastung entsprechend auch auf die weitere Zugentlastung übertragen.

Wenigstens einige oder alle der mehreren Klemmkontaktstellen können in einer Reihe senkrecht zur Längsachse und senkrecht zur Einsetzrichtung nebeneinander versetzt angeordnet sein. Somit kann eine möglichst flache Bauweise bei gleichzeitig guter Zugänglichkeit und einfacher Montage entsprechender Adern bereitgestellt werden.

Wenigstens einige oder alle der mehreren Klemmkontaktstellen können bevorzugt in mehreren der Reihen angeordnet sein, wobei die mehreren Reihen bezüglich der Einsetzrichtung zueinander versetzt angeordnet sind. Somit kann eine auch in der Breite möglichst kompakte Klemme und somit insgesamt kompakte Klemmeneinheit bereitgestellt werden. Die übereinander angeordneten Reihen von Klemmkontaktstellen können beispielsweise auch zum einfachen Durchschleifen genutzt werden, um so beispielsweise zwei zugeführte Anschlusskabel über die Klemme miteinander elektrisch zu verbinden.

Das elektrische Kontaktelement kann bevorzugt mehrere weitere Klemmkontaktstellen zum Einführen und elektrischen Anschließen jeweils einer Ader eines Anschlusskabels, beispielsweise eines über die weitere Kabeldurchführung durchgeführten Anschlusskabels, in einer weiteren Leitereinführrichtung aufweisen. Die weiteren Leitereinführrichtungen sind dann bevorzugt alle parallel zueinander und auf die vorgenannten Leitereinführrichtungen zu ausgerichtet. Somit kann eine Klemme mit unterschiedlichen Anschlussmöglichkeiten bereitgestellt werden. Durch die Bereitstellung von an gegenüberliegenden Seiten bereitgestellten Anschlussmöglichkeiten kann so beispielsweise ein einfaches Durchschleifen von zwei an gegenüberliegenden Seiten der Klemmeneinheit angeschlossenen Anschlusskabeln ermöglicht werden. Weist zudem die Klemme dann auf einer Seite noch zwei übereinander angeordnete Reihen entsprechender Klemmkontaktstellen auf, so kann über diese Seite beispielsweise dann ein Abgriff beispielsweise zu einem elektrisch betriebenen Gerät, wie einer Leuchte, ermöglicht werden.

Das Gehäuse-Unterteil und der Gehäuse-Deckel können bevorzugt miteinander korrespondierende Befestigungsabschnitte aufweisen, um das Außengehäuse im geschlossenen Zustand zu verrasten. Bei den Befestigungsabschnitten kann es sich beispielsweise um eine Raste einerseits und eine Rastaufnahme andererseits handeln. Auf diese Weise kann eine einfache aber wirkungsvolle Möglichkeit geschaffen werden, um das Außengehäuse einfach und sicher und während des Betriebs dauerhaft zu verschließen. Entsprechende Befestigungsabschnitte ermöglichen es zudem, dass Außengehäuse bei Bedarf auch in einfacher Weise wieder zu öffnen.

Das Gehäuse-Unterteil und der Gehäuse-Deckel können bevorzugt über einen Schwenkabschnitt verschwenkbar zueinander verbunden sein. Auf diese Weise können das Gehäuse-Unterteil und der Gehäuse-Deckel wahlweise zwischen einer Geschlossen-Position zum Umschließen des Anschlussraums und einer Offen-Position zum Freilegen des Anschlussraums relativ zueinander bewegbar sein. Durch die definierten Positionen kann so eine Montage vereinfacht werden. Zudem können so die das Außengehäuse bildenden Elemente in einfacher Weise gehandhabt und zudem sicher und definiert bereitgestellt werden, um einen Fehleinbau zu vermeiden.

Das Außengehäuse ist - bzw. dessen Komponenten sind - bevorzugt als (Kunststoff-)Spritzgussteil(e) und besonders bevorzugt als integrale(s) (Kunststoff-)Spritzgussteil(e) hergestellt. Das Außengehäuse kann so auf einfache Weise hergestellt werden.

Das Gehäuse-Unterteil und der Gehäuse-Deckel oder auch das gesamte Außengehäuse können/kann dabei bevorzugt integral hergestellt sein; dies bevorzugt als das (Kunststoff-)Spritzgussteil. So kann bspw. auch die (weitere) Zugentlastung zusammen mit den Gehäuseteilen hergestellt bzw. gespritzt werden. So können beispielsweise die Arretierabschnitte bzw. die Abschnitte zur Bildung der Kabeldurchführung auf die beiden Gehäuseteile verteilt im Spritzgussverfahren bereitgestellt werden. Auch ist es bevorzugt denkbar, dass ein entsprechend bereitgestellter Arretierabschnitt (bspw. an einem Rastelement) über einen mitgespritzten Abschnitt bevorzugt mit geringerem Querschnitt, welcher beispielsweise als Gelenkabschnitt dienen kann, integral ausgebildet ist. Vergleichbar ist es denkbar, dass das Gehäuse-Unterteil und der Gehäuse-Deckel beispielsweise über einen mitgespritzten Abschnitt bevorzugt mit geringerem Querschnitt, welcher ebenso als Gelenkabschnitt dienen kann, integral hergestellt sind. Dieser Gelenkabschnitt kann bevorzugt ein Gelenkabschnitt mit definierter Gelenkbewegung sein, wie bspw. ein Filmscharnier. Auch ist es denkbar, dass der Gelenkabschnitt lediglich als Verliersicherung dient und zumindest die für die Erfüllung der gegebenen Funktion notwendigen Freiheitsgerade ermöglicht.

Grundsätzlich ist es auch denkbar, dass wenigstens das Gehäuse-Unterteil und der Gehäuse-Deckel oder auch mehr oder alle Komponenten des Außengehäuses integral miteinander in einer Weise gespritzt werden, so dass sie anschließend wenigstens zum Teil vereinzelt werden können, bevor sie dann zusammengesetzt bzw. montiert werden. Hierzu können die entsprechenden Komponenten bspw. über Sollbruchstellen miteinander bzw. mit einem mitgespritzten Tragrahmen verbunden hergestellt werden (wie bspw. beim Modellbau), um so zunächst einfach gehandhabt und zum Zusammenbau schließlich einfach vereinzelt werden zu können.

Das Außengehäuse kann bevorzugt einen nach außen vorstehenden Montageabschnitt zur Befestigung der Klemmeneinheit aufweisen. Somit lässt sich die Klemmeneinheit über das Außengehäuse in besonders einfacher Weise leicht montieren, sofern dies erforderlich und erwünscht ist.

Der Montageabschnitt kann bevorzugt mit dem Gehäuse-Unterteil oder dem Gehäuse-Deckel über einen Schwächungsabschnitt verbunden sein, um den Befestigungsabschnitt wahlweise und definiert von dem restlichen Außengehäuse abzutrennen. Durch diese definiert bereitgestellte Solltrennstelle wird es ermöglicht, den Montageabschnitt, sofern dieser nicht benötigt wird, abzutrennen und somit die Dimensionenklemmeneinheit zu verringern. Aufgrund der so noch kompakteren Ausgestaltung der Klemmeneinheit kann diese in besonders engen Räumen aufgenommen werden.

Gemäß einem weiteren Aspekt betrifft die vorliegende Erfindung ferner ein Kit zur Montage einer Klemmeneinheit gemäß der vorliegenden Erfindung. Dieses Kit weist dazu das Außengehäuse sowie mehrere der Klemmen auf. Jede der Klemmen ist dabei derart ausgestaltet, dass sie in dem Anschlussraum in der Rastverbindung aufnehmbar ist. Somit kann, je nach Bedarf, eine Klemmeneinheit mit demselben Außengehäuse mit unterschiedlichen Klemmen bestückt werden. Somit kann die Klemmeneinheit, je nach Bedarf und gewünschter Funktionalität, mit einer entsprechend dafür vorgesehenen Klemme bestückt werden. Somit kann der Einsatz einer entsprechenden Klemmeneinheit deutlich erhöht werden. Zudem kann so ein Kunde die Klemmeneinheit nach Bedarf bestücken. Insbesondere bei Verwendung herkömmlicher Klemmen kann so der Kunde das Anschlussgehäuse bedarfsweise nach seinen Wünschen hinsichtlich Funktionalität ausgestalten.

Wenigstens einige der mehreren Klemmen können bevorzugt bezüglich der Längsachse unterschiedlich lang ausgebildet sein. Das Außengehäuse ermöglicht es somit, auch Klemmen unterschiedlicher Dimensionen in einfacher Weise aufzunehmen, so dass die Variabilität einer mit diesem Kit herzustellender Klemmeneinheiten besonders groß ist.

Wenigstens einige der mehreren Klemmen können bevorzugt ferner elektronische Komponenten zur Steuerung der jeweiligen Klemme oder der Klemmkontaktstellen aufweisen. Somit können wahlweise auch Klemmen eingesetzt werden, welche beispielsweise Ansteuerungsfunktionen aufweisen oder - beispielsweise kabellos über eine Funkverbindung - entsprechend ansteuerbar sind.

Weitere Vorteile, Merkmale und Ausgestaltungen der vorliegenden Erfindung werden anhand der Figuren der begleitenden Zeichnungen beschrieben. Es zeigen:
- Fig. 1: eine perspektivische Ansicht einer Klemmeneinheit gemäß einem ersten Ausführungsbeispiel der vorliegenden Erfindung,
- Fig. 2: eine Seitenansicht der erfindungsgemäßen Klemmeneinheit in Richtung II in Fig. 1 gesehen,
- Fig. 3: eine stirnseitige Ansicht der erfindungsgemäßen Klemmeneinheit in Richtung III in Fig. 1 gesehen,
- Fig. 4: eine stirnseitige Ansicht der erfindungsgemäßen Klemmeneinheit in Richtung IV in Fig. 1 gesehen,
- Fig. 5: eine perspektivische Ansicht eines mit einer ersten Klemme bestückten Gehäuse-Unterteils gemäß einer ersten Ausführungsvariante einer erfindungsgemäßen Klemmeneinheit gemäß Fig. 1,
- Fig. 6: eine Detailansicht der in Fig. 5 dargestellten Klemmeneinheit,
- Fig. 7: eine Draufsicht auf die in Fig. 5 dargestellte Klemmeneinheit,
- Fig. 8: eine perspektivische Ansicht eines mit einer anderen Klemme bestückten Gehäuse-Unterteils gemäß der ersten Ausführungsvariante der erfindungsgemäßen Klemmeneinheit gemäß Fig. 1,
- Fig. 9: eine Draufsicht auf die Klemmeneinheit gemäß Fig. 8,
- Fig. 10: eine perspektivische Ansicht des Gehäuse-Unterteils gemäß der ersten Ausführungsvariante der erfindungsgemäßen Klemmeneinheit gemäß Fig. 1 ohne Klemme,
- Fig. 11: eine Draufsicht auf das Gehäuse-Unterteil gemäß Fig. 10,
- Fig. 12: eine perspektivische Ansicht eines mit der ersten Klemme bestückten Gehäuse-Unterteils gemäß einer zweiten Ausführungsvariante einer erfindungsgemäßen Klemmeneinheit gemäß Fig. 1,
- Fig. 13: eine Draufsicht auf die Klemmeneinheit gemäß Fig. 12,
- Fig. 14: eine perspektivische Ansicht des mit der anderen Klemme bestückten Gehäuse-Unterteils gemäß der zweiten Ausführungsvariante nach Fig. 12 der erfindungsgemäßen Klemmeneinheit gemäß Fig. 1,
- Fig. 15: eine Draufsicht auf die Klemmeneinheit gemäß Fig. 14,
- Fig. 16: eine perspektivische Ansicht des Gehäuse-Unterteils gemäß der zweiten Ausführungsvariante der erfindungsgemäßen Klemmeneinheit gemäß Fig. 1 ohne Klemme, und
- Fig. 17: eine Draufsicht auf das Gehäuse-Unterteil gemäß Fig. 16,
- Fig. 18: eine perspektivische Ansicht einer Einbausituation während des Einbaus einer erfindungsgemäßen Klemmeneinheit gemäß Fig. 1 durch eine Ausnehmung (beispielsweise in einer abgehängten Decke), und
- Fig. 19: eine andere perspektivische Ansicht der Einbausituation gemäß Fig. 18.

Die Figuren zeigen unterschiedliche Ausführungsformen von erfindungsgemäßen Klemmeneinheiten 1 zum elektrischen Anschluss eines Anschlusskabels.

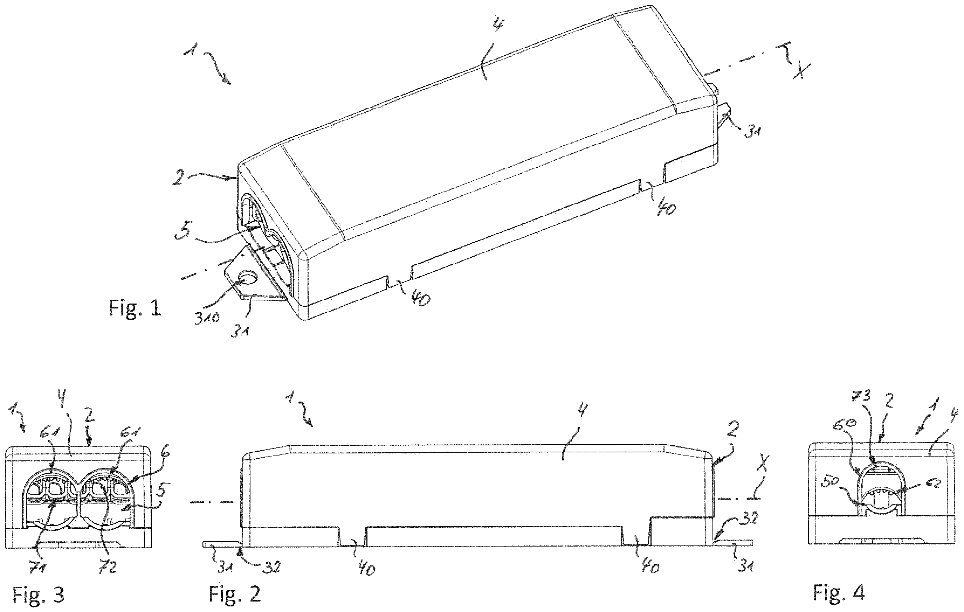

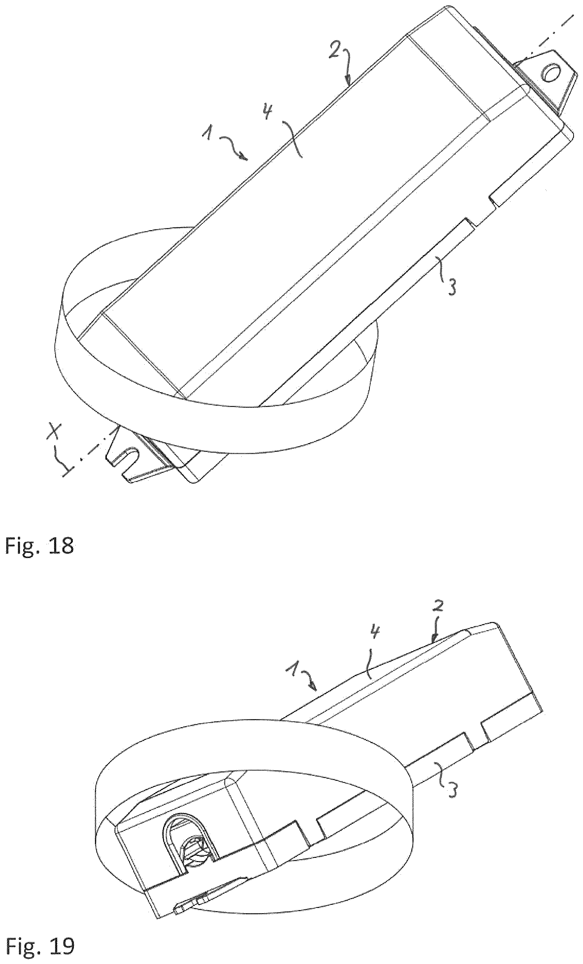

Die Klemmeneinheit 1 weist ein sich entlang einer Längsachse X längs erstreckendes Außengehäuse 2 auf, wie diese in den Fig. 1 bis 4 sowie 18 und 19 im fertig montierten Zustand gezeigt ist. Das Außengehäuse 2 ist dabei bevorzugt aus einem Kunststoffmaterial hergestellt. Besonders bevorzugt ist das Außengehäuse 2 bzw. dessen Komponenten in einem Spritzgussverfahren hergestellt.

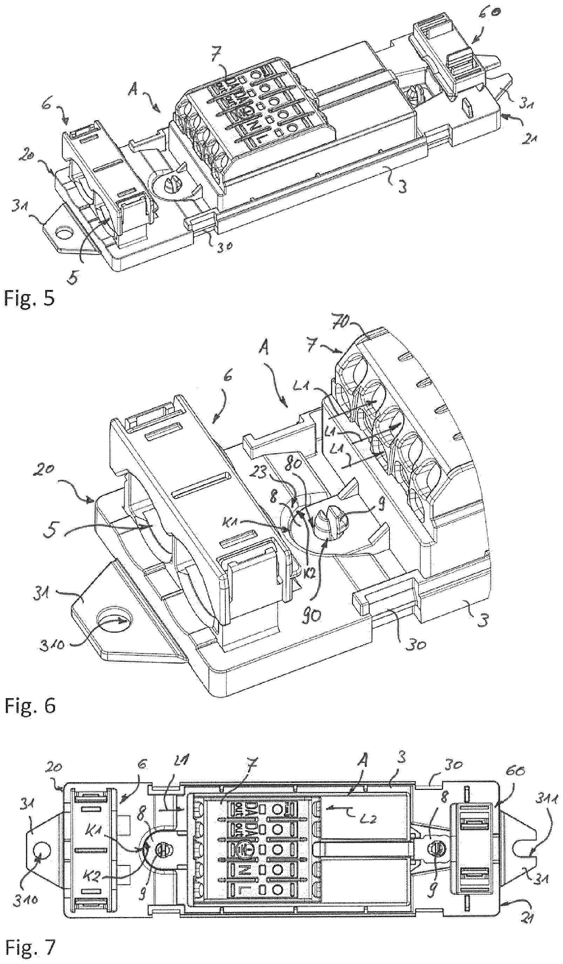

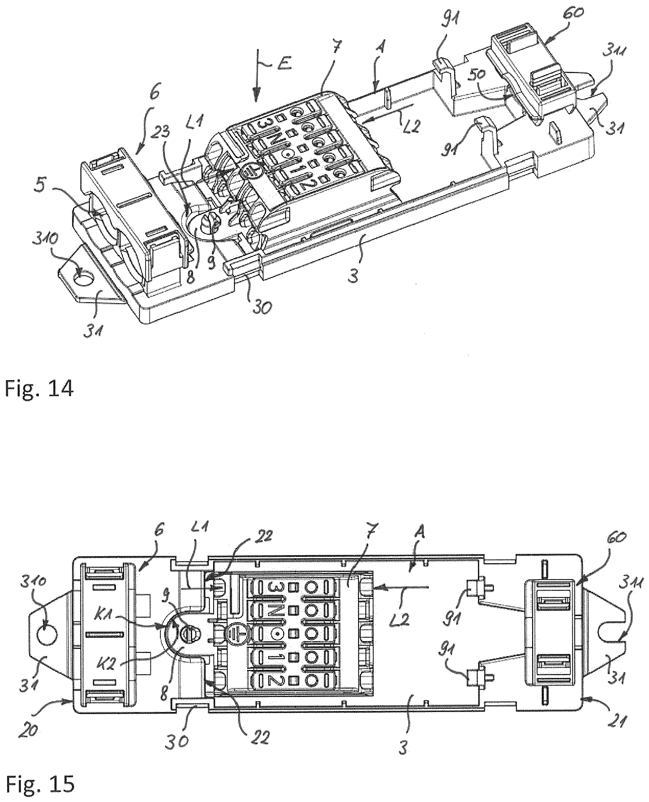

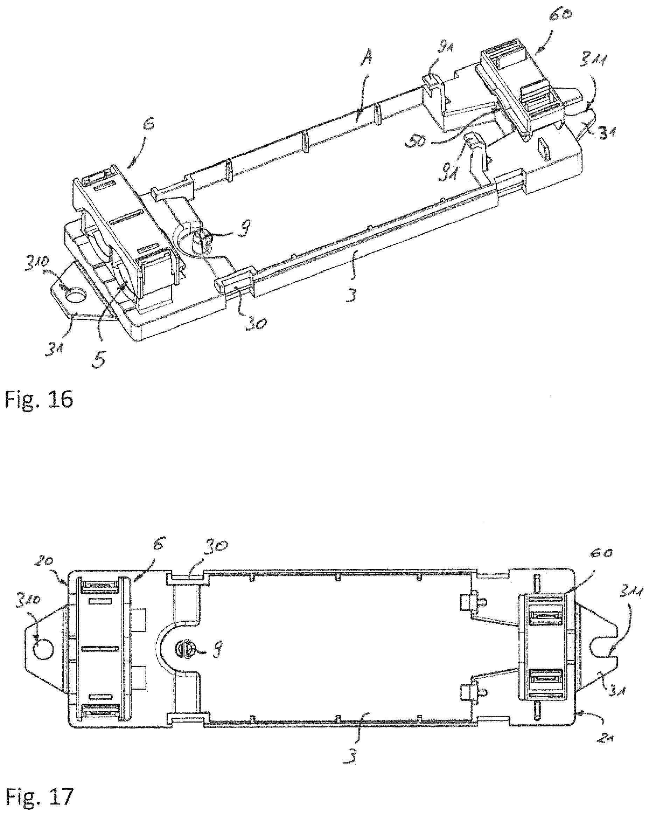

Das Außengehäuse 2 weist ein Gehäuse-Unterteil 3 auf, wie dies in allen Figuren gezeigt ist. Darüber hinaus weist das Außengehäuse 2 einen Gehäuse-Deckel 4 auf, wie dieser insbesondere in den Fig. 1 bis 4 sowie 18 und 19 zu erkennen ist. Das Gehäuse-Unterteil 3 und der Gehäuse-Deckel 4 sind wahlweise verschließbar, um einen Anschlussraum A zu umschließen, wie dies ebenso den Fig. 1 bis 4, 18 und 19 zu entnehmen ist. Ebenso sind das Gehäuse-Unterteil 3 und der Gehäuse-Deckel 4 wahlweise öffenbar, um den Anschlussraum A entsprechend freizulegen, wie dies insbesondere aus den Fig. 5 bis 17 ersichtlich ist.

Das Gehäuse-Unterteil 3 und der Gehäuse-Deckel 4 können miteinander korrespondierende Befestigungsabschnitte 30, 40 aufweisen, um das Außengehäuse 2 in geschlossenem Zustand zu verrasten, wie dies insbesondere aus den Fig. 1 und 2 ersichtlich ist. Bei den Befestigungsabschnitten 30, 40 kann es sich beispielsweise um eine Raste 40 sowie eine dazugehörige Rastaufnahme 30 handeln. Die Raste 40 ist hier als Bestandteil des Gehäuse-Deckels 4 gebildet, während die Rastaufnahme 30 hier beispielsweise als Teil des Gehäuse-Unterteils 3 ausgebildet ist.

Das Gehäuse-Unterteil 3 und der Gehäuse-Deckel 4 können über einen Schwenkabschnitt verschwenkbar zueinander verbunden sein, um wahlweise zwischen einer Geschlossen-Position zum Umschließen des Anschlussraums A und einer Offen-Position zum Freilegen des Anschlussraums A relativ zueinander bewegbar zu sein. Eine solche Ausgestaltungsform ist in den dargestellten Ausführungsbeispielen nicht dargestellt.

Das Außengehäuse 2 kann, wie allen Figuren zu entnehmen ist, einen nach außen vorstehenden Montageabschnitt 31 zum Befestigen der Klemmeneinheit 1 aufweisen. In dem hier dargestellten Ausführungsbeispiel weist das Außengehäuse 2 an beiden axialen Stirnseiten jeweils einen Montageabschnitt 31 auf. Zur Vereinfachung der Montage kann dabei einer der Montageabschnitte 31 eine Durchtrittsöffnung 310 zur definierten Aufgabe eines Befestigungselements, wie einer Schraube aufweisen, während das andere der beiden Montageabschnitte 31 hier eine Längsaussparung 311 aufweist, um mit größerer Toleranz entlang der Längsachse X ein entsprechend zweites Befestigungselement, wie beispielsweise eine Schraube, aufzunehmen.

Der Montageabschnitt 31 kann, wie hier dargestellt, mit dem Gehäuse-Unterteil 3 - oder alternativ auch mit dem Gehäuse-Deckel 4 - über einen Schwächungsabschnitt 32 (bspw. eine Solltrennstelle) verbunden sein, um den Befestigungsabschnitt 31 wahlweise und definiert von dem restlichen Außengehäuse 2 abzutrennen. Dies ist insbesondere der Seitenansicht der Fig. 2 zu entnehmen.

Das Außengehäuse 2 weist des Weiteren eine Kabeldurchführung 5 zur Durchführung des Anschlusskabels parallel zur Längsachse X in den Anschlussraum A auf, wie dies insbesondere den Fig. 5 bis 17 zu entnehmen ist. Wie ebenso den Fig. 5 bis 17 zu entnehmen ist, kann das Außengehäuse 2 ferner eine weitere Kabeldurchführung 50 zur Durchführung eines weiteren Anschlusskabels parallel zur Längsachse X in den Anschlussraum A aufweisen.

Das Außengehäuse 2 weist des Weiteren eine Zugentlastung 6 mit einem Arretierabschnitt 61 zum Arretieren des durch die Kabeldurchführung 5 geführten Anschlusskabels in der Klemmeneinheit 1 auf. Weist das Außengehäuse 2 die weitere Kabeldurchführung 50 auf, so weist das Außengehäuse 2 bevorzugt ferner eine weitere Zugentlastung 60 mit einem weiteren Arretierabschnitt 62 zur Arretieren des durch die weitere Kabeldurchführung 50 geführten Anschlusskabels in der Klemmeneinheit 1 auf. Die weitere Zugentlastung 60 ist dann bevorzugt auf einer bezüglich des Anschlussraums A gegenüberliegenden Seite der Zugentlastung 6 vorgesehen.

Wie insbesondere den perspektivischen Ansichten der Fig. 5, 6, 8, 10, 12, 14 und 16 zu entnehmen ist, kann die Zugentlastung 6 an einem bezüglich der Längsachse X axialen Ende 20 des Außengehäuses 2 vorgesehen sein. Weist das Außengehäuse 2 ferner die weitere Zugentlastung 60 auf, so kann diese an einem dem axialen Ende 20 bezüglich der Längsachse X gegenüberliegenden axialen Ende 21 des Außengehäuses 2 vorgesehen sein, wie dies insbesondere den Fig. 5 bis 17 zu entnehmen ist.

Die Klemmeneinheit 1 weist des Weiteren eine Klemme 7, wie insbesondere eine Anschluss- oder Verbindungsklemme, auf. Zwei unterschiedliche Arten solcher Klemmen 7 sind insbesondere aus den Fig. 5 bis 9 und 12 bis 15 ersichtlich.

Die Klemme 7 ist dabei lösbar in dem Anschlussraum A angeordnet, wie dies im Weiteren noch beschrieben wird. Die Klemme 7 weist ein Isolierstoffgehäuse 70 sowie ein in dem Isolierstoffgehäuse 70 aufgenommenes elektrisches Kontaktelement 71 auf. Das elektrische Kontaktelement 71 wiederum weist mehrere Klemmkontaktstellen 72 zum Einführen und elektrischen Anschließen jeweils einer Ader des Anschlusskabels in einer Leitereinführrichtung L1 auf. Die Leitereinführrichtungen L1 sind dabei alle parallel zueinander ausgerichtet, wie dies beispielsweise den Fig. 5 bis 9 und 12 bis 15 zu entnehmen ist.

Die Klemme weist bevorzugt einen sich parallel zu den Leitereinführrichtungen L1 erstreckend vorstehenden ersten Rastabschnitt 8 auf, wie dies ebenso den Fig. 5 bis 9 und 12 bis 15 zu entnehmen ist. Der erste Rastabschnitt 8 kann dabei als vorstehende Lasche gebildet sein, wie dies ebenso in den genannten Figuren gezeigt ist.

Wie den Fig. 5 bis 9 und 12 bis 15 zu entnehmen ist, kann der erste Rastabschnitt 8 integral mit dem Isolierstoffgehäuse 70 ausgebildet sein. Wie dies bei dem ersten Typ Klemme 7 gemäß den Fig. 6, 7, 12 und 13 gezeigt ist, kann der erste Rastabschnitt 8 auch integral mit dem Kontaktelement 71 ausgebildet sein, und so beispielsweise als Erdungskontakt dienen.

Wie ebenso den Fig. 5 bis 9 und 12 bis 15 zu entnehmen ist, kann der erste Rastabschnitt 8 auf einer der Kabeldurchführung 5 zugewandten oder abgewandten Seite der Klemme 7 vorgesehen sein.

Die Klemme 7 kann, wie dem Typ Klemme 7 gemäß der Fig. 6,7,12 und 13 zu entnehmen ist, zwei der ersten Rastabschnitte 8 aufweisen, welche bezüglich der Leitereinführrichtungen L1 oder der Längsachse X gesehen an axial gegenüberliegenden Seiten der Klemme 7 vorgesehen sein können.

Das Außengehäuse 2 weist im Anschlussraum A einen mit dem ersten Rastabschnitt 8 zur Bildung einer Rastverbindung korrespondierenden zweiten Rastabschnitt 9 auf, wie dieser insbesondere in den Fig. 5 bis 17 gezeigt ist. Wie insbesondere dem Ausführungsbeispiel gemäß der Fig. 5 bis 11 zu entnehmen ist, kann das Außengehäuse 2 im Anschlussraum A entsprechend den zwei ersten Rastabschnitten 8 der Klemme 7 zwei der zweiten Rastabschnitte 9 aufweisen, welche dann, wie hier gezeigt, bezüglich der Längsachse X axial zueinander versetzt vorgesehen sind, um jeweils mit einem der Rastabschnitte 8 die Rastverbindung einzugehen, wie dies insbesondere bei dem ersten Klemmentyp gemäß der Fig. 5 bis 7, 12 und 13 beispielhaft gezeigt ist.

Die Rastabschnitte 8, 9 sind derart ausgebildet, so dass diese bei Einsetzen der Klemme 7 in den Anschlussraum A in einer Einsetzrichtung E senkrecht zur Längsachse X die Rastverbindung eingehen, um die Klemme 7 derart in dem Anschlussraum A festzulegen, so dass die Leitereinführrichtungen L1 von der Kabeldurchführung 5 kommend parallel zur Längsachse X ausgerichtet sind. Somit kann die Klemme 7 in einfacher Weise in einer definierten Einsetzrichtung E - hier von oben - besonders einfach aber wirkungsvoll in dem Außengehäuse 2 aufgenommen werden.

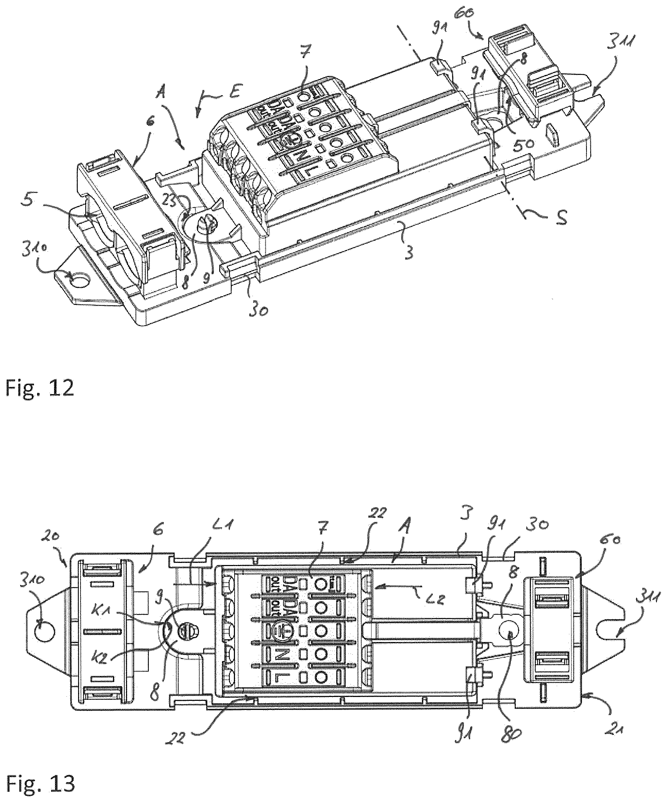

Dabei ist es denkbar, dass das Außengehäuse 2 an einer bezüglich dem zweiten Rastabschnitt 9 gegenüberliegenden Seite des Anschlussraums A einen Aufnahmeabschnitt 91 aufweist, um die Klemme 7 dort in Richtung der Längsachse X teilweise und so senkrecht zur Längsachse X formschlüssig aufzunehmen. Die Aufnahmeabschnitte 91 sind dabei insbesondere in dem Ausführungsbeispiel gemäß der Figuren 12 bis 17 gezeigt. Diese sind hier als eine Art vorspringender Arm dargestellt. In den Fig. 12 und 13 ist dabei eine Klemme 7 gezeigt, welche entsprechend mit den Aufnahmeabschnitten 91 zur Bildung einer formschlüssigen Verbindung zusammenwirken kann. Bei in dem Aufnahmeabschnitt 91 formschlüssig aufgenommen Klemme 7 kann die Klemme 7 dann um eine in der Fig. 12 beispielhaft dargestellte Schwenkachse S herum mit dem ersten Rastabschnitt 8 (hier dann dem Aufnahmeabschnitt 91 gegenüberliegend) in Einsetzrichtung E schwenkbar gelagert sein, um die Rastverbindung einzugehen.

Der erste Rastabschnitt 8 kann beispielsweise eine Rastausnehmung 80 aufweisen, wie dies insbesondere den Fig. 5 bis 9 und 12 bis 15 zu entnehmen ist. Der zweite Rastabschnitt 9 kann dann einen entgegen der Einsetzrichtung E vorstehenden Rastvorsprung 90 aufweisen, welcher zur Bildung der Rastverbindung in die Rastausnehmung 80 rastend eingreift. Dabei kann der Rastvorsprung 90 als Rastpin ausgebildet sein, wie hier dargestellt.

Wie insbesondere den Darstellungen der Fig. 6, 10, 11, 16 und 17 zu entnehmen ist, kann der Rastvorsprung 90 in Einsetzrichtung E geschlitzt sein, um so den Rastvorsprung 90 selbst als flexible Raste auszubilden.

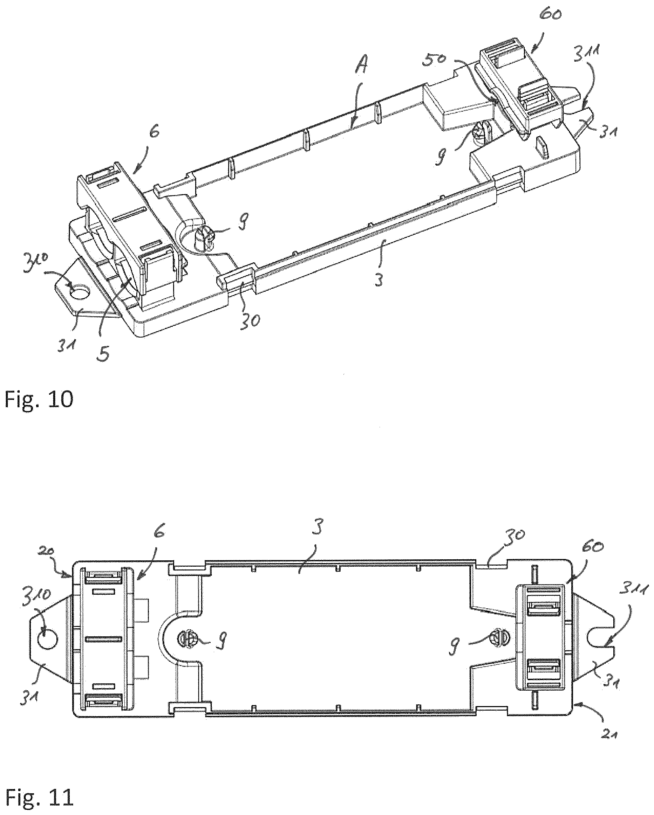

Das Außengehäuse 2 kann den Anschlussraum A seitlich und/oder axial bezüglich der Längsachse X begrenzende Stützabschnitt 22 aufweisen, wie diese insbesondere in den Draufsichten der Fig. 7, 9, 13 und 15, aber auch den Fig. 10, 11, 16 und 17 zu entnehmen ist. Die Stützabschnitte 22 sind dabei derart ausgebildet, dass sie bei in dem Anschlussraum A aufgenommene Klemme 7 die Klemme 7 seitlich ausrichten und abstützen, wie dies insbesondere aus den Einbauzuständen der Fig. 5 bis 9 und 12 bis 15 ersichtlich ist.

Der erste Rastabschnitt 8 kann in Einsetzrichtung E gesehen eine Außenkontur K1 aufweisen. Der zweite Rastabschnitt 9 kann in Einsetzrichtung E gesehen eine der Außenkontur K1 entsprechende Innenkontur K2 aufweisen. Dies ist insbesondere den Draufsichten der Fig. 7, 9, 13 und 15 zu entnehmen. Die Außenkontur K1 und die Innenkontur K2 können bevorzugt derart ausgebildet sein, dass sie in der Rastverbindung wenigstens teilweise aneinander anliegen.

Die Innenkontur K2 kann wenigstens einen Teil des Stützabschnitts 22 aufweisen oder diesen bilden, wie dies insbesondere den Draufsichten der Fig. 7 und 13 sowie auch der perspektivischen Ansicht der Fig. 6 zu entnehmen ist.

Die Innenkontur K2 kann bevorzugt durch eine Ausnehmung oder Vertiefung 23 in dem Außengehäuse 2 gebildet sein, in die dann entsprechend der erste Rastabschnitt 8 - hier in Form einer Lasche - bei Einsetzen der Klemme 7 in Einsetzrichtung E zur Bildung der Rastverbindung eingesetzt werden kann.

Wie insbesondere den perspektivischen Ansichten der Fig. 5, 6, 8, 10, 12, 14 und 16 zu entnehmen ist, kann die Zugentlastung 6 zwei der Arretierabschnitte 61 aufweisen, welche in einer Richtung senkrecht zur Längsachse X und senkrecht zur Einsetzrichtung E zueinander versetzt angeordnet sind. Auf diese Weise können zwei Anschlusskabel parallel zueinander in das Außengehäuse 2 und insbesondere in den Anschlussraum A geführt werden. Somit kann auch bei einem Anschluss mehrerer Anschlusskabel eine quer zur Längsachse X gesehen kompakte Klemmeneinheit 1 gebildet werden.

Wie insbesondere den Fig. 5 bis 9 und 12 bis 15 zu entnehmen ist, können wenigstens einige der mehreren Klemmkontaktstellen 72 in einer Reihe senkrecht zur Längsachse X und senkrecht zur Einsetzrichtung E nebeneinander versetzt angeordnet sein. Auch können wenigstens einige der mehreren Klemmkontaktstellen 72 in mehreren der Reihen angeordnet sein, wobei die mehreren Reihen dann bezüglich der Einsetzrichtung E zueinander versetzt angeordnet sind.

Das elektrische Kontaktelement 71 kann bevorzugt mehrere weitere Klemmkontaktstellen 73 zum Einführen und elektrischen Anschließen jeweils einer Ader eines Anschlusskabels, vorzugsweise eines über die weitere Kabeldurchführung 50 durchgeführten Anschlusskabels, in einer weiteren Leitereinführrichtung L2 aufweisen. Die weiteren Leitereinführrichtungen L2 sind dann bevorzugt alle parallel zueinander und auf die Leitereinführrichtungen L1 zu ausgerichtet, wie dies den hier dargestellten Klemmentypen der Fig. 5 bis 9 und 12 bis 15 zu entnehmen ist.

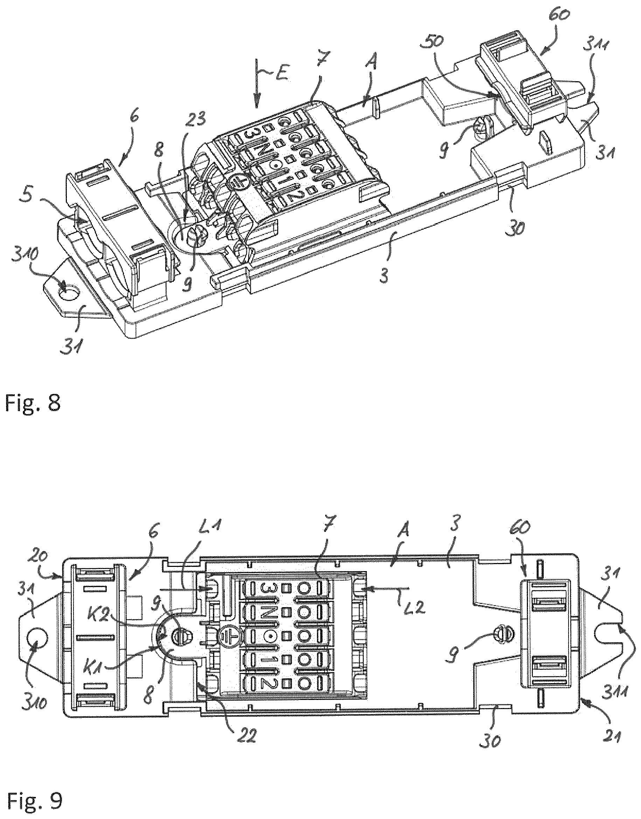

Insbesondere mit Verweis auf die Fig. 5 bis 9 und 12 bis 15 ist die vorliegende Erfindung ferner auf ein Kit zur Montage der vorbeschriebenen Klemmeinheit 1 gerichtet. Das Kit weist dabei zum einen das vorgeschriebenen Außengehäuse 2 und zum anderen mehrere der Klemmen 7 auf. In den hier dargestellten Ausführungsbeispielen sind beispielhaft zwei Typen von Klemmen 7 dargestellt; in den Fig. 5 bis 7, 12 und 13 ein erster Klemmentyp, und in den Fig. 8, 9, 14 und 15 ein zweiter Klemmentyp. Jede der Klemmen 7 ist dabei in dem Anschlussraum A in der Rastverbindung aufnehmbar, wie dies ebenso den vorgenannten Figuren zu entnehmen ist. Selbstverständlich sind auch andere als die hier dargestellten Klemmentypen denkbar, sofern diese in dem Anschlussraum A in der Rastverbindung in dem Außengehäuse 2 bzw. dem Anschlussraum A aufnehmbar sind.

Wenigstens einige der mehreren Klemmen 7 können bezüglich der Längsachse X unterschiedlich lang ausgebildet sein, wie dies beispielsweise auch für die hier dargestellten beiden Klemmentypen gilt.

Wenigstens einige der mehreren Klemmen 7 können ferner elektronische Komponenten zur Steuerung der jeweiligen Klemme 7 oder der Klemmkontaktstellen 72, 73 aufweisen. Dies gilt beispielhaft für den in den Fig. 5 bis 7 und 12 und 13 dargestellten ersten Klemmentyp, welcher zur Aufnahme der hier nicht sichtbaren elektronischen Komponenten ein größeres Isolierstoffgehäuse 70 aufweist.

Die vorliegende Erfindung ist durch die vorbeschriebenen Ausführungsbeispiele nicht beschränkt, sofern sie vom Gegenstand der folgenden Ansprüche umfasst ist.

## Patentansprüche

1. Klemmeneinheit (1) zum elektrischen Anschluss eines Anschlusskabels, aufweisend:
• ein sich entlang einer Längsachse (X) längs erstreckendes Außengehäuse (2) mit
∘ einem Gehäuse-Unterteil (3) und einen Gehäuse-Deckel (4), welche wahlweise verschließbar sind, um einen Anschlussraum (A) zu umschließen, und wahlweise öffenbar sind, um den Anschlussraum (A) freizulegen,
∘ einer Kabeldurchführung (5) zur Durchführung des Anschlusskabels parallel zur Längsachse (X) in den Anschlussraum (A), und
∘ einer Zugentlastung (6) mit einem Arretierabschnitt (61) zum Arretieren des durch die Kabeldurchführung (5) geführten Anschlusskabels in der Klemmeneinheit (1),
• eine Klemme (7), insbesondere eine Anschluss- oder Verbindungsklemme, welche lösbar in dem Anschlussraum (A) angeordnet ist, wobei die Klemme (7) aufweist:
∘ ein Isolierstoffgehäuse (70), und
∘ ein in dem Isolierstoffgehäuse (70) aufgenommenes elektrisches Kontaktelement (71) mit mehreren Klemmkontaktstellen (72) zum Einführen und elektrischen Anschließen jeweils einer Ader des Anschlusskabels in einer Leitereinführrichtung (L1),
wobei die Leitereinführrichtungen (L1) alle parallel zueinander ausgerichtet sind,
wobei die Klemme (7) einen sich parallel zu den Leitereinführrichtungen (L1) erstreckend vorstehenden ersten Rastabschnitt (8) aufweist,
wobei das Außengehäuse (2) im Anschlussraum (A) einen mit dem ersten Rastabschnitt (8) zur Bildung einer Rastverbindung korrespondierenden zweiten Rastabschnitt (9) aufweist, und
wobei die Rastabschnitte (8, 9) derart ausgebildet sind, so dass diese bei Einsetzen der Klemme (7) in den Anschlussraum (A) in einer Einsetzrichtung (E) senkrecht zur Längsachse (X) die Rastverbindung eingehen, um die Klemme (7) derart in dem Anschlussraum (A) festzulegen, so dass die Leitereinführrichtungen (L1) von der Kabeldurchführung (5) kommend parallel zur Längsachse (X) ausgerichtet sind.

2. Klemmeneinheit (1) nach Anspruch 1, wobei der erste Rastabschnitt (8) eine Rastausnehmung (80) aufweist, und der zweite Rastabschnitt (9) einen entgegen der Einsetzrichtung (E) vorstehenden Rastvorsprung (90) aufweist, welcher zur Bildung der Rastverbindung in die Rastausnehmung (80) rastend eingreift,
wobei vorzugsweise der Rastvorsprung (90) als Rastpin ausgebildet ist,
wobei vorzugsweise der Rastvorsprung (90) besonders vorzugsweise in Einsetzrichtung (E) geschlitzt ist.

3. Klemmeneinheit (1) nach einem der vorhergehenden Ansprüche,
wobei das Außengehäuse (2) den Anschlussraum (A) seitlich und/oder axial bezüglich der Längsachse (X) begrenzende Stützabschnitte (22) aufweist, welche bei in dem Anschlussraum (A) aufgenommener Klemme (7) die Klemme (7) seitlich ausrichten und abstützen,
und/oder
wobei der erste Rastabschnitt (8) in Einsetzrichtung (E) gesehen eine Außenkontur (K1) aufweist, und wobei der zweite Rastabschnitt (9) in Einsetzrichtung (E) gesehen eine der Außenkontur (K1) entsprechende Innenkontur (K2) aufweist, welche vorzugsweise in der Rastverbindung wenigstens teilweise aneinander anliegen.

4. Klemmeneinheit (1) nach dem vorhergehenden Anspruch, wobei die Innenkontur (K2) wenigstens einen Teil des Stützabschnitts (22) aufweist oder bildet,
wobei vorzugsweise die Innenkontur (K2) durch eine Ausnehmung oder Vertiefung (23) in dem Außengehäuse (2) gebildet ist.

5. Klemmeneinheit (1) nach einem der vorhergehenden Ansprüche,
wobei der erste Rastabschnitt (8) als vorstehende Lasche gebildet ist,
und/oder
wobei der erste Rastabschnitt (8) integral mit dem Isolierstoffgehäuse (70) oder integral mit dem Kontaktelement (71) ausgebildet ist,
und/oder
wobei der erste Rastabschnitt (8) auf einer der Kabeldurchführung (5) zugewandten oder abgewandten Seite der Klemme (7) vorgesehen ist.

6. Klemmeneinheit (1) nach einem der vorhergehenden Ansprüche, wobei die Klemme (7) zwei der ersten Rastabschnitte (8) aufweist, welche bezüglich der Leitereinführrichtungen (L1) oder der Längsachse (X) gesehen an axial gegenüberliegenden Seiten der Klemme (7) vorgesehen sind,
wobei vorzugsweise das Außengehäuse (2) im Anschlussraum (A) entsprechend zwei der zweiten Rastabschnitte (9) aufweist, welche bezüglich der Längsachse (X) axial zueinander versetzt vorgesehen sind, um jeweils mit einem der ersten Rastabschnitte (8) die Rastverbindung einzugehen.

7. Klemmeneinheit (1) nach einem der vorhergehenden Ansprüche, wobei das Außengehäuse (2) an einer bezüglich dem zweiten Rastabschnitt (9) gegenüberliegenden Seite des Anschlussraumes (A) einen Aufnahmeabschnitt (91) aufweist, um die Klemme (7) dort in Richtung der Längsachse (X) teilweise und so senkrecht zur Längsachse (X) formschlüssig aufzunehmen, wobei bei in dem Aufnahmeabschnitt (91) formschlüssig aufgenommener Klemme (7) die Klemme (7) um eine Schwenkachse (S) herum mit dem ersten Rastabschnitt (8) in Einsetzrichtung (E) schwenkbar gelagert ist, um die Rastverbindung einzugehen.

8. Klemmeneinheit (1) nach einem der vorhergehenden Ansprüche, wobei die Zugentlastung (6) zwei der Arretierabschnitte (61) aufweist, welche in einer Richtung senkrecht zur Längsachse (X) und senkrecht zur Einsetzrichtung (E) zueinander versetzt angeordnet sind.

9. Klemmeneinheit (1) nach einem der vorhergehenden Ansprüche, wobei das Außengehäuse (2) ferner aufweist:
• eine weitere Kabeldurchführung (50) zur Durchführung eines weiteren Anschlusskabels parallel zur Längsachse (X) in den Anschlussraum (A), und
• eine weitere Zugentlastung (60) mit einem weiteren Arretierabschnitt (62) zum Arretieren des durch die weitere Kabeldurchführung (50) geführten Anschlusskabels in der Klemmeneinheit (1),
wobei die weitere Zugentlastung (60) auf einer bezüglich des Anschlussraums (A) gegenüberliegenden Seite der Zugentlastung (6) vorgesehen ist.

10. Klemmeneinheit (1) nach einem der vorhergehenden Ansprüche, wobei die Zugentlastung (6) an einem bezüglich der Längsachse (X) axialen Ende des Außengehäuses (2) vorgesehen ist,
wobei vorzugsweise, wenn vorhanden, die weitere Zugentlastung (60) an einem dem axialen Ende (20) bezüglich der Längsachse (X) gegenüberliegenden axialen Ende (21) des Außengehäuses (2) vorgesehen ist.

11. Klemmeneinheit (1) nach einem der vorhergehenden Ansprüche,
wobei wenigstens einige der mehreren Klemmkontaktstellen (72) in einer Reihe senkrecht zur Längsachse (X) und senkrecht zur Einsetzrichtung (E) nebeneinander versetzt angeordnet sind,
wobei vorzugsweise wenigstens einige der mehreren Klemmkontaktstellen (72) in mehreren der Reihen angeordnet sind,
wobei die mehreren Reihen bezüglich der Einsetzrichtung (E) zueinander versetzt angeordnet sind,
und/oder
wobei das elektrische Kontaktelement (71) mehrere weitere Klemmkontaktstellen (73) zum Einführen und elektrischen Anschließen jeweils einer Ader eines Anschlusskabels, vorzugsweise eines über die weitere Kabeldurchführung (50) durchgeführten Anschlusskabels, in einer weiteren Leitereinführrichtung (L2) aufweist, wobei die weiteren Leitereinführrichtungen (L2) alle parallel zueinander und auf die Leitereinführrichtungen (L1) zu ausgerichtet sind.

12. Klemmeneinheit (1) nach einem der vorhergehenden Ansprüche,
wobei das Gehäuse-Unterteil (3) und der Gehäuse-Deckel (4) miteinander korrespondierende Befestigungsabschnitte (30,40) aufweisen, um das Außengehäuse (2) im geschlossenen Zustand zu verrasten,
und/oder
wobei das Gehäuse-Unterteil (3) und der Gehäuse-Deckel (4) über einen Schwenkabschnitt verschwenkbar zueinander verbunden sind, um wahlweise zwischen einer Geschlossenposition zum Umschließen des Anschlussraums (A) und einer Offenposition zum Freilegen des Anschlussraums (A) relativ zueinander bewegbar zu sein.

13. Klemmeneinheit (1) nach einem der vorhergehenden Ansprüche, wobei das Außengehäuse (2) einen nach außen vorstehenden Montageabschnitt (31) zur Befestigung der Klemmeneinheit (1) aufweist,
wobei vorzugsweise der Montageabschnitt (31) mit dem Gehäuse-Unterteil (3) oder dem Gehäuse-Deckel (4) über einen Schwächungsabschnitt (32) verbunden sind, um den Befestigungsabschnitt (31) wahlweise und definiert von dem restlichen Außengehäuse (2) abzutrennen.

14. Kit zur Montage einer Klemmeneinheit (1) nach einem der vorhergehenden Ansprüche, aufweisend:
• das Außengehäuse (2), und
• mehrere der Klemmen (7), wobei jede der Klemmen (7) in dem Anschlussraum (A) in der Rastverbindung aufnehmbar ist.

15. Kit nach dem vorhergehenden Anspruch, wobei wenigstens einige der mehreren Klemmen (7) bezüglich der Längsachse (X) unterschiedlich lang ausgebildet sind,
und/oder
wobei wenigstens einige der mehreren Klemmen (7) ferner elektronische Komponenten zur Steuerung der jeweiligen Klemme (7) oder der Klemmkontaktstellen (72, 73) aufweisen.
